Europäisches Patentamt

European Patent Office

Office européen des brevets

(11) Numéro de publication : **0 599 684 A1**

(19)

## (12) DEMANDE DE BREVET EUROPEEN

(21) Numéro de dépôt : **93402723.6**

(22) Date de dépôt : **05.11.93**

(51) Int. Cl.⁵ : **C08F 210/02,** C08F 2/38

(30) Priorité : **26.11.92 FR 9214242**

(43) Date de publication de la demande :
**01.06.94 Bulletin 94/22**

(84) Etats contractants désignés :
**BE DE ES IT SE**

(71) Demandeur : **ELF ATOCHEM S.A.**
**4 & 8, Cours Michelet**
**La Défense 10**
**F-92800 Puteaux (FR)**

(72) Inventeur : **Gouarderes, René**
**33 Clos des Arrouturous**
**F-64320 Idron (FR)**

(54) **Procédé de préparation de copolymères éthylène-acétate de vinyle de faible masse molaire.**

㊼    Préparation de copolymères éthylène-acétate de vinyle de faible masse molaire, renfermant plus de 25 % poids d'acétate de vinyle, par copolymérisation radicalaire en masse, en présence d'un aldehyde en $C_3$ à $C_5$, à une température supérieure à 100°C et à une pression inférieure à 1000 bars.
Ces copolymères sont utilisables comme additifs améliorant la tenue au froid des gazoles.

EP 0 599 684 A1

La présente invention concerne un procédé de préparation sous haute pression de copolymères éthylène-acétate de vinyle de faible masse molaire en poids (Mw).

En général, on contrôle la masse molaire des copolymères de l'éthylène en utilisant un agent de transfert de chaîne au cours de la copolymérisation. Cet agent réduit la masse molaire et donc augmente le melt index des copolymères obtenus.

Parmi ces agents de transfert, les hydrocarbures comme le butane ou le propane sont souvent employés. Toutefois, ils présentent l'inconvénient de favoriser la séparation du mélange réactionnel en deux phases au moment de la compression dans le réacteur. Il est donc nécessaire d'utiliser un appareil de pompage particulier ou bien de comprimer l'acétate de vinyle séparément, ce qui est relativement coûteux.

Le brevet DD 156328 décrit un procédé de copolymérisation d'éthylène-acétate de vinyle sous une pression supérieure à 800 bars, et utilise comme agent de transfert un mélange acétaldéhyde-hydrogène.

Ces deux agents de transfert présentent un inconvénient majeur lié au fait que l'un est liquide et l'autre gazeux, ce qui impose des contraintes particulières et alourdit le processus de compression.

Le brevet GB 1226167 décrit la copolymérisation de l'éthylène et de faibles quantités d'acétate de vinyle en présence de propionaldéhyde et sous de très hautes pressions (1800 à 2100 bars). Les copolymères obtenus ont des masses molaires élevés et renferment autour de 5 % d'acétate de vinyle.

La présente invention permet de préparer les copolymères d'éthylène et d'acétate de vinyle de faible masse molaire renfermant des quantités importantes d'acétate de vinyle.

On a maintenant trouvé un procédé de préparation de copolymères éthylène-acétate de vinyle de faible masse molaire en poids (Mw), et renfermant au moins 25 % en poids d'acétate de vinyle, ce procédé consistant à copolymériser en masse et sous pression un mélange d'éthylène et d'acétate de vinyle en présence d'au moins un initiateur radicalaire et d'au moins un aldéhyde, à une température supérieure à 100°C, ledit procédé étant caractérisé en ce que la pression de la copolymérisation est inférieure à 1000 bars, que le pourcentage d'acétate de vinyle dans le mélange initial de monomères est au moins égal à 25 moins égal à 25 % en poids et que l'on opère en présence d'un aldéhyde aliphatique ayant au moins 3 atomes de carbone.

La masse molaire en poids (Mw) des copolymères obtenus selon la présente invention est en général inférieure à 10 000 et de préférence comprise entre 3000 et 10 000.

La réaction de copolymérisation s'effectue en masse, c'est à dire que le milieu réactionnel est constitué essentiellement des deux monomères à copolymériser.

La copolymérisation peut être réalisée soit dans un réacteur tubulaire, soit dans un autoclave agité ou bien encore dans une série de réacteurs en cascade.

L'éthylène et l'acétate de vinyle sont portés à une pression inférieure à 1000 bars, en général comprise entre 500 et 900 bars et de préférence entre 500 et 700 bars, et à une température supérieure à 100°C et en général comprise entre 100 et 250°C.

Selon le procédé conforme à l'invention, le mélange de monomères soumis à la copolymérisation renferme au moins 25 % en poids d'acétate de vinyle et de préférence renferme entre 25 % et 45 % d'acétate de vinyle.

La copolymérisation est effectuée en présence d'un aldéhyde aliphatique de formule R-CHO dans laquelle R est un radical hydrocarboné aliphatique saturé, linéaire ou ramifié, ayant un nombre de carbone allant de 2 à 4. Parmi ces aldéhydes on peut citer le propionaldéhyde, le butyraldéhyde et le valéraldéhyde. Parmi ces composés on préfère tout particulièrement le propionaldéhyde.

Selon la présente invention on utilise entre 0,05 % à 2 % en mole d'aldéhyde par rapport aux monomères mis en oeuvre et de préférence 0,1 à 1,5 % en mole.

L'aldéhyde est mis en solution dans l'acétate de vinyle et cette solution est ensuite injectée en continu dans le flux d'éthylène à l'entrée du réacteur de copolymérisation.

S'agissant des initiateurs de copolymérisation, on peut utiliser, selon le procédé de l'invention, tous les initiateurs de polymérisation en masse des polymères et copolyméres à base d'éthylène et généralement des générateurs de radicaux libres tels que des péroxydes organiques comme le perbenzoate de ter-butyle, le perpivalate de ter-butyle, le peroctoate de ter-butyle.

On utilise généralement une concentration d'initiateur comprise entre 20ppm et 400 ppm molaire par rapport aux monomères mis en oeuvre.

Ces initiateurs sont généralement mis en solution dans un hydrocarbure saturé tel que l'heptane ou l'hexane.

L'injection de l'initiateur peut être réalisé en un seul endroit ou bien, simultanément, en plusieurs endroits.

Cette dernière façon d'opérer est particulièrement avantageuse dans le cas de l'utilisation d'un réacteur tubulaire.

Dans le cas d'une multi injection, on peut utiliser le même initiateur, ou des initiateurs différents.

Les copolymères obtenus selon la présente invention renferment plus de 25% en poids d'acétate de vinyle et de préférence entre 25 % et 45 %.

EP 0 599 684 A1

Ils sont solubles dans les milieux hydrocarbonés et sont utilisables notamment comme additifs améliorant la tenue au froid des gazoles.

Les exemples suivants illustrent l'invention.

**EXEMPLES**

La copolymérisation de l'éthylène et de l'acétate de vinyle est réalisée dans une installation haute pression alimentée par de l'éthylène gazeux à la pression constante de 30 bars et à température ambiante. Ce gaz est ensuite liquéfié dans un condenseur fonctionnant à la température de -15°C et sous une pression de 30 bars.

Une pompe à membrane à tête réfrigérée aspire cet éthylène liquide et le comprime dans l'étage "moyenne pression" à 300 bars.

Une deuxième pompe également à tête réfrigérée génère la haute pression (réglable de 500 bars à 2500 bars) à partir de l'éthylène aspiré dans l'étage "moyenne pression".

L'éthylène entre donc en continu dans un réacteur de type tubulaire agité, de 1,5 m de longueur et de 21 mm de diamètre.

La solution acétate de vinyle-propionaldéhyde est injectée en continu dans le flux d'éthylène juste à l'entrée du réacteur au moyen d'une pompe haute pression à débit réglable.

L'initiateur péroxyde en solution dans l'heptane est injecté en continu en tête de réacteur et au milieu du réacteur au moyen d'une autre pompe haute pression.

Une série de thermocouples disposés le long du réacteur permet de suivre et de contrôler l'exothermicité de la réaction en suivant le profil des températures.

En sortie du réacteur, une vanne de régulation permet l'évacuation en continu du copolymère et des monomères n'ayant pas réagi.

La copolymérisation démarre en tête de réacteur puis est relancée en milieu de réacteur dans le cas de la double injection.

La réaction se poursuit donc le long du tube réactionnel dans lequel le temps de séjour réglable est de l'ordre de 60 à 70 secondes.

Dans le réacteur, à ces conditions de pression et de température, le copolymère éthylène-acétate de vinyle et les monomères à l'état hypercritique forment un mélange monophasique.

En sortie du réacteur, le mélange est dirigé vers des séparateurs à moyenne ou basse pression dans lesquels s'opère la séparation de phase permettant de séparer le copolymère des monomères n'ayant pas réagi.

Ces derniers sont renvoyés dans les circuits de recyclage.

En fin d'essai, le copolymère est recueilli dans les séparateurs basse-pression.

Dans le tableau 1, on résume les résultats obtenus dans 6 essais.

On indique pour chaque essai:
- Les paramètres réactionnels:
    La pression P en bars,
    La température initiale Ti en °C
- Les réactifs
    Le pourcentage d'acétate de vinyle AV en % en poids et en mole dans le mélange initiale,
    La quantité de propionaldéhyde en mole %,
    Les quantités d'initiateur utilisées dans les 2 injections en g/h
- Le taux de conversion
- Les caractéristiques du produit obtenu :
    La masse molaire en poids (Mw) déterminée par chromatographie d'exclusion stérique.
    Le pourcentage d'acétate de vinyle (% en poids).

On constate que les produits obtenus selon le procédé conforme à l'invention ont des masses molaires en poids Mw qui varient entre 3000 et 5500 avec des pourcentages en acétate de vinyle compris entre 30 et 37 % en poids.

3

| ESSAI | PARAMETRES REACTIONNELS | | REACTIFS | | | | | TAUX DE CONVERS (% Pds) | PRODUIT | |
|---|---|---|---|---|---|---|---|---|---|---|
| | P (bar) | Ti (°C) | AV (%) POIDS | AV (%) Mol | Propional -déhyde (% Mol) | INITIATEUR (g/h) PBZ(1) | PPV (2) | | Mw | AV % Pds |
| 1 Comparatif | 600 | 185 | 30,0 | 12,3 | 0 | a) 3,9<br>b) - | -<br>7,1 | 15,3 | 17000 | 35,9 |
| 2 Comparatif | 1500 | 185 | 29,8 | 11,9 | 0 | a) 0,9<br>b) - | -<br>1,1 | 10,9 | 51000 | 31,0 |
| 3 | 600 | 185 | 30,9 | 12,8 | 0,3 | a) 3,5<br>b) 5,4 | -<br>- | 18,3 | 5500 | 37,2 |
| 4 | 600 | 185 | 29,9 | 12,4 | 1,2 | a) 5,4<br>b) 5,4 | -<br>- | 21,1 | 3000 | 30,3 |

(1) PBZ = Perbenzoate de ter-butyle

(2) PPV = Perpivalate de ter-butyle

   a)   = Première injection

   b)   = Seconde injection

TABLEAU 1

EP 0 599 684 A1

**Revendications**

1.  Procédé de préparation de copolymères éthylène-acétate de vinyle de faible masse molaire en poids (Mw) et renfermant au moins 25 % en poids d'acétate de vinyle, ce procédé consistant à copolymériser en masse et sous pression un mélange d'éthylène et d'acétate de vinyle en présence d'au moins un initiateur radicalaire et d'au moins un aldéhyde, à une température supérieure à 100°C, ledit procédé étant caractérisé en ce que la pression de la copolymérisation est inférieure à 1000 bars, que le pourcentage d'acétate de vinyle dans le mélange initiale de monomères est au moins égal à 25 % en poids et que l'on opère en présence d'un aldéhyde aliphatique ayant au moins 3 atomes de carbone.

2.  Procédé selon la revendication 1 caractérisé en ce que le pourcentage d'acétate de vinyle dans le mélange de monomères est compris entre 25 et 45 % poids.

3.  Procédé selon l'une des revendications 1 à 2 caractérisé en ce que la pression est comprise entre 500 et 900 bars.

4.  Procédé selon la revendication 3 caractérisé en ce que la pression est comprise entre 500 et 700 bars.

5.  Procédé selon l'une quelconque des revendications 1 à 4, caractérisé en ce que l'aldéhyde aliphatique a pour formule R-CHO dans laquelle R est un radical hydrocarboné aliphatique saturé, linéaire ou ramifié, ayant un nombre de carbone allant de 2 à 4.

6.  Procédé selon la revendication 5, caractérisé en ce que l'aldéhyde est le propionaldéhyde.

7.  Procédé selon l'une quelconque des revendications 5 ou 6, caractérisé en ce que l'on utilise 0,05 % à 2 % en mole d'aldéhyde par rapport au monomères mis en oeuvre.

8.  Procédé selon la revendication 7, caractérisé en ce que l'on utilise 0,1 à 1,5% en mole d'aldéhyde.

9.  Les copolymères éthylène-acétate de vinyle tels qu'obtenus par application du procédé selon l'une quelconque des revendications 1 à 8.

Office européen
des brevets

**RAPPORT DE RECHERCHE EUROPEENNE**

Numero de la demande

EP 93 40 2723

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.5) |
|---|---|---|---|
| Y | DE-A-21 02 469 (BASF AG)<br>* page 2, alinéa 4 - page 3, alinéa 1 *<br>* page 3, alinéa 4 - page 4, alinéa 3;<br>revendications 1,2 *<br>--- | 1-9 | C08F210/02<br>C08F2/38 |
| Y | DE-A-17 45 570 (WACKER-CHEMIE GMBH)<br>* page 5, alinéa 2 - page 6, alinéa 1;<br>revendications 1-4 *<br>--- | 1-9 | |
| Y | CHEMICAL ABSTRACTS, vol. 83, no. 12,<br>22 Septembre 1975, Columbus, Ohio, US;<br>abstract no. 98174w,<br>TATSUKAMI, YOSHIHARU 'WAX-LIKE ETHYLENE<br>COPOLYMERS WITH IMPROVED LIGHTFASTNESS'<br>page 16 ;colonne 2 ;<br>* abrégé * | 1-9 | |
| Y | & JP-A-75 049 388 (SUMITOMO CHEMICAL CO.,<br>LTD.) 2 Mai 1975<br>----- | 1-9 | |

**DOMAINES TECHNIQUES RECHERCHES (Int.Cl.5)**

C08F

Le présent rapport a été établi pour toutes les revendications

| Lieu de la recherche | Date d'achèvement de la recherche | Examinateur |
|---|---|---|
| LA HAYE | 14 Décembre 1993 | Permentier, W |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)